# DEMANDE DE BREVET EUROPEEN

(11) **EP 1 696 670 A2**
(43) Date de publication de la demande: **30.08.2006**
(21) Numéro de dépôt: 06001979.1
(22) Date de dépôt: 10.07.1998
(51) Int. Cl.: H04N 7/24

(54) **Signal de données de modification d'une scène graphique, procédé et dispositif correspondants**

(30) Priorité: 11.07.1997 FR 9709120
(62) Demande divisionnaire de: 98938735.2
(71) Demandeur: FRANCE TELECOM, 75015 Paris (FR); TDF, 75732 Paris Cedex 15 (FR)
(72) Inventeur: Signes, Julien, San Fransisco California 94117 (US)
(74) Mandataire: Bioret, Ludovic

(57) **Abrégé**

L'invention concerne un signal de données de modification d'une scène graphique, émis par un serveur vers au moins un terminal multimedia, comprenant des trames de mise à jour de ladite scène émises par ledit serveur sans attendre une requête d'un utilisateur, chacune desdites trames comprenant une série d'au moins une commande de mise à jour (21) suivie chacune d'un indicateur (22) pouvant prendre deux valeurs, une première valeur indiquant la présence d'une commande à suivre dans ladite trame, et une seconde valeur indiquant que la commande considérée est la dernière commande de ladite trame.

## Description

Le domaine de l'invention est celui de la restitution de scènes graphiques animées, par exemple sur un terminal multimédia. Plus précisément, l'invention concerne la modification de scènes animées, c'est-à-dire la réalisation de changements ponctuels, commandés à distance par exemple par un serveur distant, d'une scène graphique restituée sur un terminal.

Par scène graphique, on entend ici l'agencement d'objets graphiques, vidéo et image dans le temps et dans l'espace. De telles scènes graphiques peuvent être en deux ou trois dimensions, et contenir divers types de primitives graphiques.

L'invention trouve des applications dans tous les cas où il peut être nécessaire de modifier la structure d'une scène graphique, ou d'un élément la composant.

Ainsi, l'invention peut être utilisée dans un grand nombre d'applications multimédia avancées. En particulier, l'invention peut s'appliquer avantageusement pour :
- les services de télévision numériques et de communication avancés, dans lesquels il prévu d'échanger des messages sous forme graphique. Il est par exemple possible d'ajouter des messages sous forme vidéo pour établir une visio-conférence en superposition d'une vidéo numérique traditionnelle. On peut également prévoir d'ajouter des messages publicitaires ou des logos sur une scène existante ;
- les applications multi-utilisateurs dans lesquelles on est capable de faire une modification ponctuelle d'une scène à distance. Par exemple, il est envisageable d'ajouter un nouveau "message" sous forme graphique dans un ou plusieurs terminaux distants. Il est également possible de remplacer certains objets, ou bien de remplacer la totalité de la scène ;
- les services de consultation multimédia utilisant des objets graphiques 2D ou 3D.

Des formats de description de scènes graphiques sont déjà connus. La norme ISO/IEC DIS 14772-1 décrit ainsi le format VRML 2.0. Le groupe de normalisation MPEG-4 a défini également un format de description de scène, appelé BIFS (Binary Format for Scene (format binaire pour scène)), qui s'inspire de VRML 2.0. Le format BIFS est notamment présenté dans "The MPEG-4 Systems Verification Model" (ISO/IEC JTC1/SC29/WG 11-N1693, MPEG 97, avril 1997).

Ce format de description de scène a pour but de décrire les relations spatio-temporelles entre les divers objets graphiques d'une scène. Pour cela, il définit un certain nombre de noeuds, ou objets, représentant toutes les primitives graphiques que l'on veut représenter. Chacun de ces noeuds comprend des champs pré-définis qui représentent les caractéristiques de ces noeuds. Une scène, pour être jouée par un terminal, doit être chargée intégralement dans le terminal, sous la forme d'un fichier texte, au format ASCII.

En d'autres termes, le format BIFS permet de transmettre une structure de scène sous la forme d'une description paramétrique, ou un script.

L'inconvénient de cette technique est que, si elle prévoit l'animation d'une scène graphique, elle ne permet pas la modification à distance de celle-ci. Il n'est par exemple pas possible d'ajouter un nouvel objet, d'en supprimer ou d'en ajouter un autre,... Ces fonctions sont toutefois nécessaires, notamment dans les applications envisagées ci-dessus.

On connaît déjà le format dit "External Authoring Interface" (consultable sur le serveur http:/www.sgi.com) qui propose grâce à une interface normalisée en langage "Java" (marque déposée) de modifier les paramètres de la scène.

Il est également possible de pré-programmer des changements dans la scène par des connexions entre champs, qui sont des mécanismes de passage d'événements, encore appelés "ROUTE" en VRML et dans le format BIFS décrit par le groupe MPEG-4. Les "ROUTE" permettent de définir des connexions de façon que, lorsque un premier champ change de valeur, le second champ auquel il est connecté par une "ROUTE" prend également la même valeur.

Cependant, ces deux méthodes ont des inconvénients majeurs :
- l"'external API" est utilisée pour modifier la scène VRML à l'aide d'une application en langage "Java". Cette application "Java" peut être téléchargée depuis un serveur. Cependant, cette méthode présente les deux inconvénients suivants :
   - le téléchargement d'une classe "Java" est coûteux en ressources de transmission ;
   - ce mode suppose que tout terminal implémentant ce mécanisme contienne une machine virtuelle "Java". Les exigences sur le terminal sont donc importantes.
- par ailleurs, ces deux méthodes supposent que l'on connaît les paramètres de modification de scène a priori. Ceci n'est évidemment pas le cas lors de l'utilisation d'animation dans une application de communication.

Le système MPEG-4 a développé une première version de format de mise à jour de scène, mais elle n'est ni complète ni optimale.

D'autres techniques encore sont connues, telles que le D-VRML décrit par ARIKAWA. Cependant, elles restent limitées à des modifications d'une scène originale pré-existante, et ne permette qu'un nombre limité d'applications (comme on le verra plus clairement par la suite, la reconnaissance de ce problème est en elle-même une partie de l'invention).

L'invention a notamment pour objectif de pallier ces inconvénients de l'état de la technique.

Plus précisément, un objectif de l'invention est de fournir un signal de données, ainsi qu'un procédé et un dispositif pour sa mise en oeuvre, qui permettent une modification à distance simple à mettre en oeuvre et qui consomment peu de ressources de transmission de tout type de scènes graphiques.

En d'autres termes, l'invention a notamment pour objectif de fournir une technique de modification à distance de scènes graphiques qui répondent à au moins un des critères suivants :
- simplicité de la mise en forme et de l'interprétation des données ;
- faible consommation en moyens de mémorisation et/ou en ressources de transmission ;
- capacité à modifier tout type d'objet et tout type de scène graphique ;
- possibilité de modifier des objets, ou noeuds, de façon quelconque, c'est-à-dire non prédéfinie.

Un autre objectif de l'invention est de fournir une telle technique, permettant la réalisation de terminaux multimédia simples et peu coûteux, c'est-à-dire ne nécessitant ni des moyens de calcul importants, ni de gros moyens de mémorisation de données.

Un objectif de l'invention est encore de fournir une telle technique, pouvant fonctionner sur des réseaux de transmission à bas débit.

L'invention a également pour objectif de fournir une telle technique, qui soit compatible avec les normes VRML et MPEG-4.

Ces objectifs, ainsi que d'autres qui apparaîtront plus clairement par la suite, sont atteints selon l'invention à l'aide d'un signal de données de modification d'une scène graphique selon la revendication 1.

les commandes de mise à jour comprennent, selon un aspect de l'invention, une commande nouvelle permettant d'effectuer un remplacement complet d'une scène par une autre. Cet aspect repose sur une approche tout à fait nouvelle de l'animation. En effet, l'homme du métier a toujours considéré qu'il n'y avait qu'une unique scène (la scène originale), qu'il fallait faire évoluer au fur et à mesure, en agissant sur les éléments de la scène.

Selon cet aspect de l'invention, on se place à un niveau supérieur, sans considérer qu'il n'y a qu'une scène. On propose donc de pouvoir, en une seule opération, changer l'intégralité de la scène. Cela permet notamment d'offrir des applications nouvelles, non envisagées et impossibles avec les techniques antérieures, telles que la diffusion en télévision numérique, les techniques dites "multicast" (par exemple sur Internet), les services dits "push".

Par exemple, l'invention permet le remplacement momentané d'une scène "vidéo", tel qu'un film, par une scène de "publicité interactive", sans attendre une requête de l'utilisateur.

Avantageusement, certaines desdites trames portent également au moins une des commandes appartenant au groupe comprenant les commandes suivantes :
- insertion d'un élément de ladite scène graphique ;
- modification d'un élément de ladite scène graphique ;
- suppression d'un élément de ladite scène graphique,
lesdits moyens de construction mettant à jour ladite scène en fonction desdites trames de mise à jour.

Les opérations de modification d'une scène graphique sont ainsi très simples, et demandent peu de ressources de transmission. Ce signal peut donc être transmis sur des réseaux à faibles débits, et ne nécessitent pas de moyens importants dans les terminaux les recevant.

Par "élément", on entend notamment les objets, ou noeuds, les champs d'un noeud, les valeurs d'un champ, les connexions entre deux champs, la scène complète.

Ainsi, lesdites commandes d'insertion d'un élément peuvent comprendre des commandes d'insertion d'au moins un des éléments appartenant au groupe comprenant :
- insertion d'un nouvel objet ;
- insertion d'une nouvelle valeur dans un champ vectoriel (ou multiple) existant ;
- insertion d'un nouvelle connexion entre deux champs de deux objets existants ("ROUTE").

De même, lesdites commandes de suppression d'un élément peuvent comprendre des commandes de suppression d'au moins un des éléments appartenant au groupe comprenant :
- suppression d'un objet existant ;
- suppression d'une valeur dans un champ vectoriel existant ;
- suppression d'une connexion existante entre deux champs de deux objets existants ("ROUTE").

Lesdites commandes de remplacement d'un élément peuvent quant à elles comprendre des commandes de remplacement d'au moins un des éléments appartenant au groupe comprenant :
- remplacement d'un objet existant par un nouvel objet ;
- remplacement d'un champ de caractérisation d'un objet par un nouveau champ de caractérisation ;
- remplacement d'une valeur d'un champ de caractérisation vectoriel ;
- remplacement d'une connexion existante entre deux champs de deux objets existants ("ROUTE") ;
- remplacement d'une scène graphique.

Selon un mode de réalisation avantageux de l'invention, lesdites commandes comprennent :
- un premier champ désignant le type de commande, parmi au moins certains des types suivants : insertion, suppression, remplacement et remplacement de scène graphique;
- un deuxième champ désignant le type d'élément concerné, parmi les éléments suivants, selon le type de commande : objet, champ, valeur de champ vectoriel et connexion ;
- un troisième champ définissant les éléments concernés.

L'invention concerne également un procédé de mise à jour d'un tel signal, par un serveur, tel que revendiqué en revendication.

De même, l'invention concerne encore un dispositif de mise à jour d'une scène graphique dans un terminal, selon la revendication 10.

D'autres caractéristiques et avantages de l'invention apparaîtront plus clairement à la lecture de la description suivantes d'un mode de réalisation préférentiel de l' invention, donné à titre de simple exemple illustratif et non limitatif, et des dessins annexés, parmi lesquels :
- la figure 1 illustre le principe général de la mise en oeuvre de l'invention ;
- la figure 2 présente, de façon schématique la structure d'une trame de mise à jour selon l'invention ;
- la figure 3 présente le détail de la sémantique des commandes élémentaires de la trame de la figure 2 ;
- la figure 4 présente un premier exemple d'utilisation de la technique de l' invention ;
- la figure 5 illustre un exemple d'utilisation de la commande de remplacement de scène de l'invention.

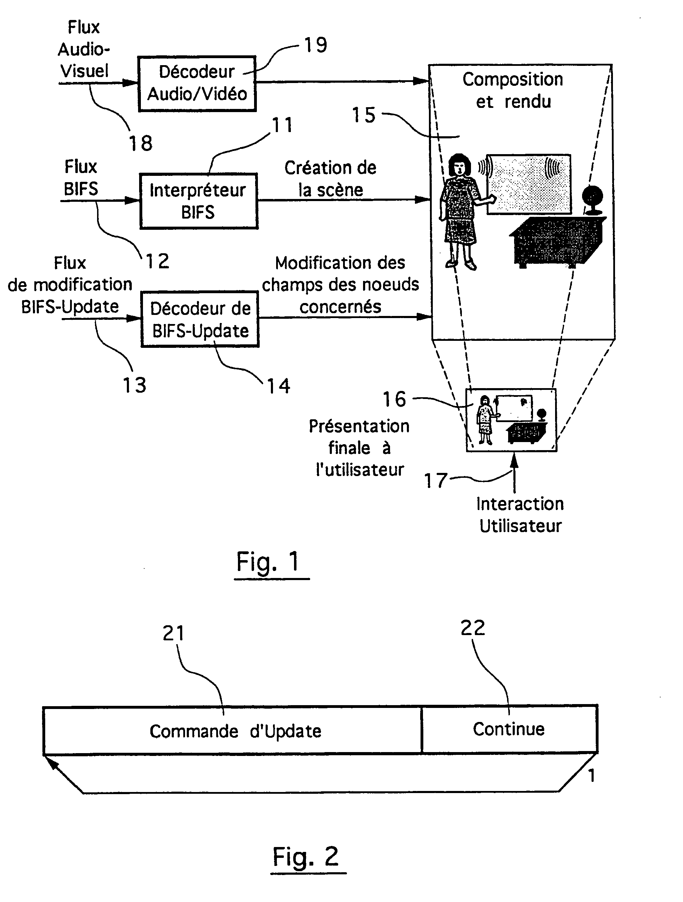

La figure 1 présente donc un synoptique d'un terminal, par exemple compatible avec la norme MPEG-4, et prenant en compte le signal, ou flux, de modification de scène de l'invention.

Ce terminal comprend des moyens 11 de création de la scène d'origine, à partir d'un flux de données 12, au format BIFS. En d'autres termes, le terminal charge la scène graphique. Celle-ci est décrite en termes d'objets, ou noeuds.

On rappelle que le but du format de description de scène BIFS est de décrire les relations spatio-temporelles entre les objets graphiques d'une scène. Pour cela le format BIFS définit un certain nombre de « noeuds » représentant toutes les primitives graphiques que l'on veut pouvoir représenter.

Les noeuds sont des entités qui représentent une primitive graphique. Par exemple, on peut définir les noeuds Sphere, Cone, Transform... Chacun de ces noeuds ont des champs qui caractérisent le noeud, et qui sont envoyés dans la description de scène juste après la déclaration du noeud.

Certains de ces noeuds sont déclarés comme pouvant être référencés. Pour être référencés, on associe un identifiant unique au noeud concerné. Certains des champs sont déclarés comme pouvant être modifiés de l'extérieur, d'autres comme étant des valeurs fixées. Les valeurs modifiables pourront être atteintes par le mécanisme de mise à jour de l'invention.

Enfin, les descriptions au format BIFS et VRML comprennent également des entités particulières appelées "ROUTE". Les "ROUTE" sont les déclarations qui permettent dans le langage de description de scène de spécifier le passage d'événements entre deux champs de deux noeuds de la scène.

Selon l'invention, certains de ces noeuds peuvent être déclarés comme modifiables, ce qui permettra de les modifier dans le futur. Ceci peut s'exprimer par le mécanisme "DEF" dans VRML, et un mécanisme similaire dans le système MPEG-4.

Une fois cette scène chargée, soit par requête de l'utilisateur (mode interactif), soit de manière automatique à un certain instant (mode passif, dit encore «push model»), une trame de mise à jour 13, appelée "BIFS-update", peut être chargée pour modifier un ou plusieurs éléments de la scène, en cas de besoin.

La modification est assurée par le décodeur 14, qui reçoit la trame 13 et qui effectue les commandes correspondantes.

On obtient ainsi une image animée 15, que l'on peut présenter (16) à l'utilisateur. Le cas échéant, celui-ci peut intervenir (17), à l'aide d'une interface appropriée. Cette intervention provoque, le cas échéant, une nouvelle modification.

Chaque commande de modification peut avoir 4 formes de base :
- insertion d'un champ ;
- modification d'un champ ;
- suppression d'un champ ;
- remplacement de toute la scène.

Chaque commande élémentaire peut s'appliquer soit sur un seul noeud, un champ vectoriel ou simple, ou encore une "ROUTE". Une quatrième commande est prévue pour le remplacement complet d'une scène. Cette commande essentielle selon l'invention est décrite plus en détail par la suite.

On prévoit donc les commandes de modifications suivantes :
- Commandes d'insertion :
   - insérer un nouveau noeud dans une famille de noeuds ("grouping node") existant. On fournit l'identifiant du noeud de type "grouping node" dans lequel on doit insérer un nouveau noeud, "NodeId". Ensuite, on a trois choix pour insérer un nouveau noeud : il est inséré soit à la fin du champ "children" (enfant) du "grouping node", au début, ou à une certaine position repérée par son indice Index. Enfin on envoie la valeur du nouveau noeud à insérer.
   - insérer une nouvelle valeur dans un champ multiple. On fournit l'identifiant du noeud à modifier, "Id", l'indice du champ concerné par la modification, repéré par "fieldNb". Ensuite, on a trois choix pour insérer une nouvelle valeur : celle-ci est insérée soit à la fin du champ multiple, au début, ou à une certaine position repérée par son indice Index. Enfin, on envoie la valeur à insérer. Cette valeur peut être un nouveau noeud, ou bien une nouvelle valeur d'un type quelconque.
   - insérer une nouvelle "ROUTE". Cette "ROUTE" est spécifiée par la spécification du noeud de départ repéré par "id1" et du champ concerné "field1", et du noeud repéré par son identifiant "id2" et le champ à modifier "field 2" dans ce noeud.
- Commande de suppression :
   - on peut supprimer un noeud en donnant son identifiant "id".
   - Il est également possible de supprimer une valeur particulière d'un champ multiple, encore appelée valeur indexée ("idxValue"). Pour cela, on fournit comme précédemment l'identifiant du noeud à modifier, id, le champ concerné par la modificaion repéré par "fieldNb". Enfin, on envoie une certaine position repérée soit par son indice "Index", soit par le fait qu'il s'agit de la première du champ multiple, soit enfin par le fait qu'il s'agit de la dernière valeur du champ multiple.
   - enfin, on peut supprimer une "ROUTE" en indiquant son identifiant "RouteId".
- Commandes de remplacement de valeur :
   - il est possible de remplacer un noeud en fournissant son identifiant "Id" suivi de la nouvelle valeur du noeud.
   - on peut remplacer un champ spécifique d'un noeud donné. Pour cela, il faut fournir l'identifiant du noeud à modifier, "Id", le champ concerné par la modification repéré par "FieldNb". Ce champ peut lui-même être un nouveau noeud, un champ à valeur multiple ou un champ à valeur simple.
   - il est également possible de modifier une valeur spécifique d'un champ multiple. Pour cela, on envoie l'identifiant du noeud à modifier, "Id", et le champ concerné par la modification repéré par "FieldNb", et enfin la position dans le champ multiple repérée soit par son indice "Index", soit par le fait qu'il s'agit de la première du champ multiple, soit enfin par le fait qu'il s'agit de la dernière valeur du champ multiple. Ensuite, on fournit la nouvelle valeur du champ.
   - Il est enfin possible de modifier une "ROUTE", en envoyant son identifiant, suivi de la nouvelle "ROUTE" comme spécifiée dans les paragraphes précédents.
- Commande de remplacement de scène : il est enfin possible de remplacer la totalité de la scène en donnant simplement la nouvelle valeur de la scène totale.

La trame "BIFS-update" 13 peut donc être construite selon le schéma de la figure 2. Elle comprend une commande de mise à jour 21, suivi d'un indicateur "continu" 22, valant (par exemple) "0" s'il n'y a plus de commande à suivre dans la trame, et valant "1" sinon (dans l'exemple).

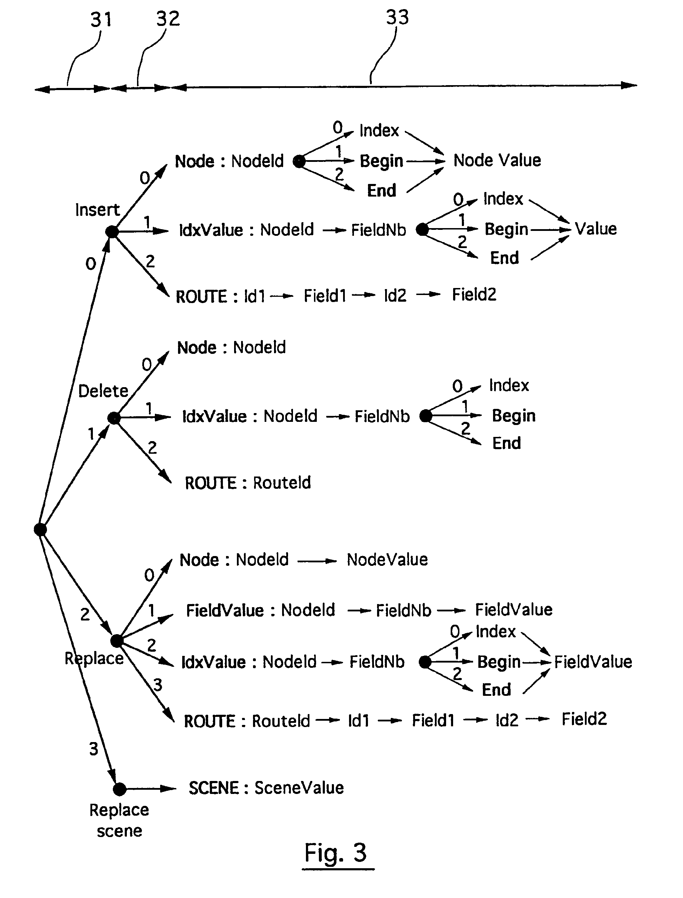

La syntaxe des commandes élémentaires peut par exemple être celle illustrée en figure 3.

A un premier niveau 31, on associe un code spécifique aux quatre types de commandes, par exemple :
- 0 : insertion (insert) ;
- 1 : suppression (delete) ;
- 2 : remplacement (replace) ;
- 3 : remplacemenr d'une scène (replacescene).

A un deuxième niveau 32, on donne un code spécifique à chaque type d'élément concerné.

Ainsi, pour l'insertion, ou l'effacement on distingue :
- 0 : insertion d'un objet (node) ;
- 1 : insertion d'une valeur dans un champ vectoriel (IdxValue) ;
- 2 : insertion d'une "ROUTE" .

Pour les remplacements, on distingue :
- 0 : remplacement d'un objet (node) ;
- 1 : remplacement d'un champ (FieldValue) ;
- 2 : remplacement d'un paramètre de champ vectoriel (IdxValue) ;
- 3 : remplacement d'une "ROUTE".

Enfin, à un troisième niveau 33, on précise les paramètres précis de chaque élément concerné. Ainsi, on indique, de la façon déjà décrite plus haut :
- insertion d'un objet : nouvel identifiant de l'objet, et liste des champs, selon la structure décrite ci-dessus ;
- insertion de paramètres : identifiants du noeud (nodeId) et du champ (field Nb), et positionnement de l'insertion, sous la forme :
   - code : - 0 : début (première valeur) ;
   - 1 : index de la valeur ;
   - 2 : fin (dernière valeur).
   - valeur correspondante (value).
- insertion d'une "ROUTE" : identifiant du noeud source (id1) du champ du noeud source (field 1), identifiant du noeud destinataire (id2), champ du noeud destinataire (field 2) ;
- effacement d'un objet ou d'une "ROUTE" : identifiant de l'élément correspondant ;
- effacement d'un paramètre : identifiants du noeud, du champ, index, et éventuellement positionnement de la supression ;
- remplacement d'un objet : identifiant de l'objet, nouvelle valeur de l'objet ;
- remplacement d'un champ : identifiants du noeud et du champ, nouvelle valeur du champ ;
- remplacement d'un paramètre : identifiants du noeud et du champ, index du paramètre, nouvelle valeur ;
- remplacement d'une "ROUTE" : identifiant de la "ROUTE", identifiants du noeud source et du champ source, identifiant du noeud destinataire et du champ destinataire ;
- remplacement d'une scène : valeur d'une nouvelle scène.

On notera que la structure proposée permet de coder sur seulement 2 bits le premier niveau 31, et sur seulement 2 bits le second niveau 32.

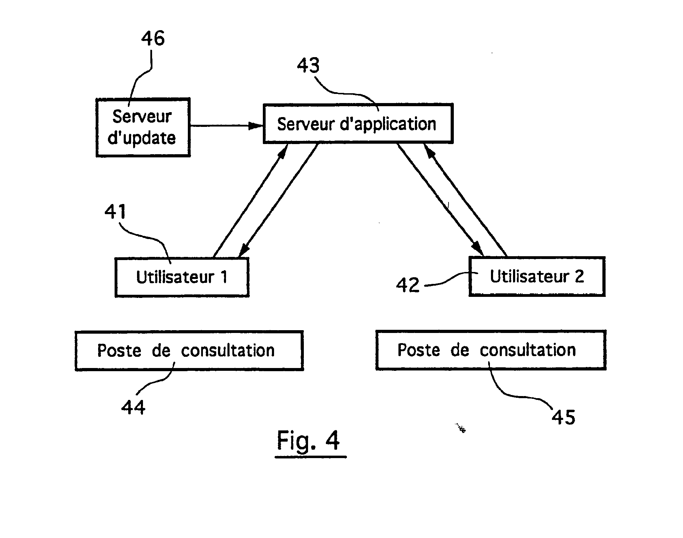

La figure 4 illustre un premier exemple d'utilisation de la technique de modification proposé selon l'invention, dans le cadre d'une application de télécommerce. A l'initialisation, les utilisateurs 41 et 42 se connectent sur le serveur d'application 43, via leurs terminaux multimédia 44 et 45. Le serveur 43 leur présente une boutique virtuelle par exemple.

Le serveur 46 de mise à jour, ou d"'update", informé de cette connexion, peut alors envoyer alors des messages graphiques publicitaires, sous la forme "d'ajout d'objets" pour informer des dernières promotions. Les objets ajoutés apparaissent alors dans la scène présentée par les terminaux. De même, il est possible de supprimer un objet (correspondant par exemple à un objet retiré de la vente), ou de modifier un élément quelconque de la scène.

On décrit maintenant de façon détaillée un exemple de flux de données de modification de scène. Dans cet exemple, on visualise un cube au moment initial, animé dès que l'utilisateur clique sur l'objet. Ensuite, on insère une sphère. Puis, on change l'interpolation des positions pour qu'elle concerne la sphère. Enfin, on supprime le Cube de la scène.

Cet exemple est donné dans un format VRML mais peut être aisément transcrit dans sa version binaire en BIFS. La scène originale est donnée par :

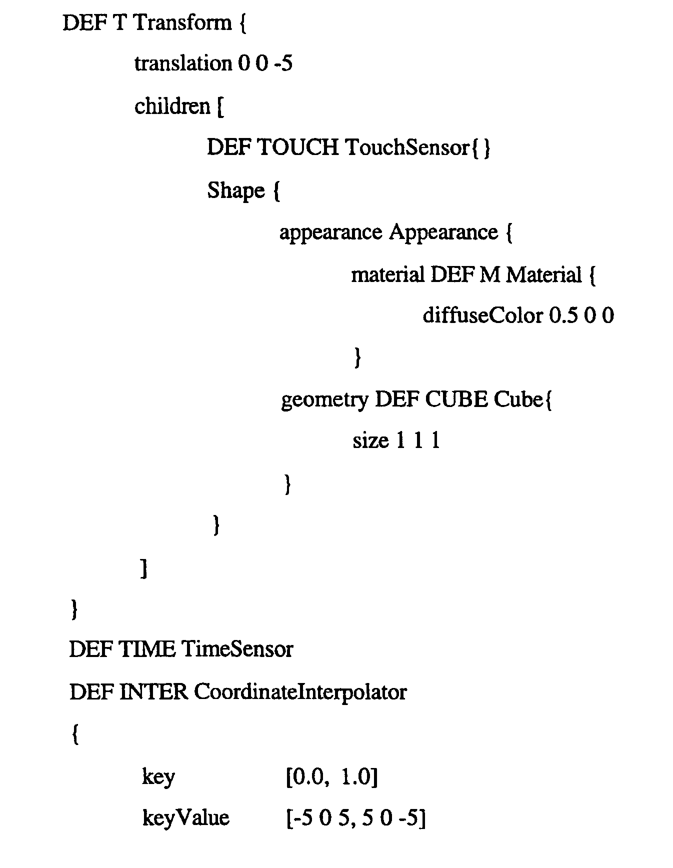

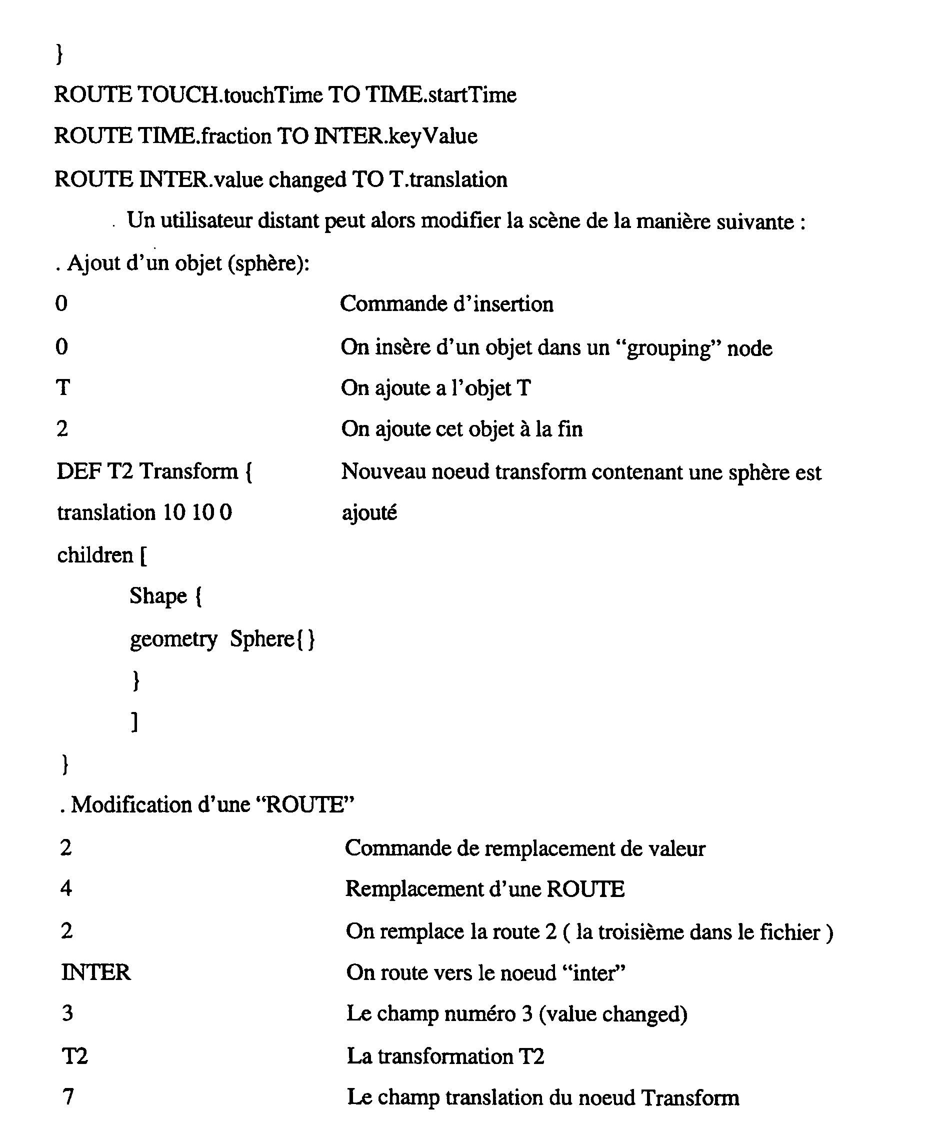

Ainsi, l'animation va maintenant porter sur la nouvelle sphère insérée.
- Suppression d'un objet (le cube) :
   - 1: Commande de suppression
   - 2: Suppression de noeud
   - CUBE: On supprime le cube de la scène

Comme on l'a déjà indiqué, la nouveauté essentielle de l'invention réside dans la mise en oeuvre d'une commande de remplacement de la scène courante par une autre, et dans la découverte de la nécessité d'une telle commande, alors que les méthodes antérieures ne considéraient que des actions sur une unique scène.

Dans des applications simplifiées, on notera d'ailleurs que cette commande de remplacement de scène peut être la seule utilisée.

En utilisant la technique de l'invention ("BIFS-update"), il est possible de se brancher à tout instant sur un flux de modification de scène (comme sur une chaîne de télévision). Les commandes de remplacement de scène deviennent alors les points d'accès aléatoire au flux (cette notion peut être comparée à celle de la trame "intra" en vidéo).

Cette commande de remplacement permet d'utiliser le signal de l'invention dans un cadre très large d'applications, par rapport aux techniques connues, telles que les applications diffusées pour la télévision numérique, les techniques "multicast" sur "internet", et notamment les services dits "push". L'invention est également compatibles avec les services de type "pull" et autres.

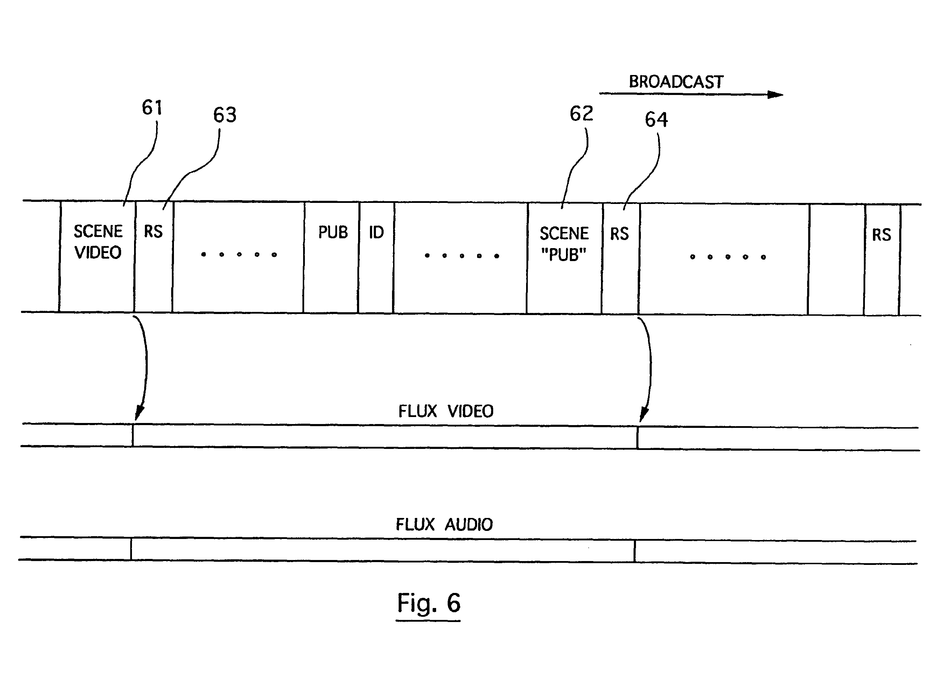

La figure 5 illustre un exemple, concernant la publicité difusée. On veut remplacer la scène vidéo 61 (un film) momentanément par une nouvelle scène de publicité interactive 62, décrite sous la forme d'une scène BIFS.

La commande de remplacement de scène RS 63 permet d'imposer la nouvelle scène à un utilisateur (sans action de la part de ce dernier). Une nouvelle commande de remplacement de scène RS 64 permet de revenir à la scène vidéo (ou à une nouvelle scène).

## Revendications

1. Signal de données de modification d'une scène graphique, émis par un serveur vers au moins un terminal multimédia,
ladite scène graphique étant formée d'un ensemble d'au moins un noeud, défini par au moins un champ, lesdits noeuds correspondant à des primitives utilisées par des moyens de construction d'image pour restituer ladite scène graphique sur au moins un écran (16) dudit ou desdits terminaux multimédia,
**caractérisé en ce qu'**il comprend des trames de mise à jour de ladite scène émises par ledit serveur sans attendre une requête d'un utilisateur,
chacune desdites trames comprenant une série d'au moins une commande de mise à jour suivie chacune d'un indicateur pouvant prendre deux valeurs, une première valeur indiquant la présence d'une commande à suivre dans ladite trame, et une seconde valeur indiquant que la commande considérée est la dernière commande de ladite trame.

2. Signal de données selon la revendication 1, **caractérisé en ce que** lesdites commandes de mise à jour prennent une des quatre formes de base suivantes :
- insertion d'un élément, notamment un noeud ou champ, de ladite scène graphique ;
- modification d'un élément de ladite scène graphique ;
- suppression d'un élément de ladite scène graphique ;
- remplacement (63, 64) d'une scène graphique existante (61) par une nouvelle scène graphique (62), de façon à permettre en une seule commande la suppression de ladite scène courante et la mise en place de l'intégralité de ladite nouvelle scène,
lesdits éléments appartenant au groupe d'éléments comprenant les noeuds et les champs.

3. Signal selon la revendication 2, **caractérisé en ce qu'**on distingue, dans la définition d'une scène, deux types d'éléments, les éléments de valeur fixée et les éléments modifiables, lesdites commandes d'insertion, de modification et de suppression ne s'appliquant qu'auxdits éléments modifiables.

4. Signal selon l'une quelconque des revendications 2 et 3, **caractérisé en ce que** ledit groupe d'éléments (13) comprend également des connexions entre deux champs de deux objets existants ("ROUTE"), identifiées par un identifiant qui leur est propre.

5. Signal selon l'une quelconque des revendications 1 à 4, **caractérisé en ce que** chacune desdites commandes comprend :
- un premier champ désignant le type de commande, parmi au moins certains des types suivants : insertion, suppression, remplacement et remplacement de scène graphique ;
- un deuxième champ désignant le type d'élément concerné, parmi les éléments suivants, selon le type de commande : objet, champ, valeur de champ vectoriel et connexion ;
- un troisième champ définissant les éléments concernés.

6. Signal selon la revendication 5, **caractérisé en ce que** lesdits premier et deuxième champs sont codés chacun à l'aide de seulement 2 bits.

7. Signal selon l'une quelconque des revendications 1 à 6, **caractérisé en ce qu'**au moins certaines desdites commandes de remplacement de scène porte la valeur de la scène courante, de façon à former un point d'accès aléatoire audit flux, pour qu'un utilisateur puisse se brancher à tout instant sur ledit flux de données de mise à jour, et visualiser la scène correspondante en cours de transmission.

8. Signal selon l'une quelconque des revendications 1 à 7, **caractérisé en ce que** lesdites commandes de remplacement de scène sont émises sans attendre une requête d'un utilisateur et permettant soit :
- la suppression d'une scène courante et la mise en place de l'intégralité d'une nouvelle scène en une seule commande, en délivrant la valeur de ladite nouvelle scène graphique (62) ; soit
- un branchement à tout instant sur ledit flux de données de mise à jour, en formant un point d'accès aléatoire audit flux.

9. Procédé de mise à jour par un serveur d'une scène graphique destinée à être présentée sur un écran d'au moins un terminal, par transmission de trames de mise à jour dans un flux de mise à jour,
**caractérisé en ce qu'**il comprend les étapes suivantes :
- construction de trames de mise à jour de ladite scène, chaque trame comprenant une série d'au moins une commande de mise à jour suivie chacune d'un indicateur pouvant prendre deux valeurs, une première valeur indiquant la présence d'une commande à suivre dans ladite trame, et une seconde valeur indiquant que la commande considérée est la dernière commande de ladite trame ;
- transmission de chacune desdites trames de mise à jour vers au moins un desdits terminaux, émises sans attendre une requête d'un utilisateur.

10. Procédé de mise à jour dans un terminal d'une scène graphique destinée à être présentée sur un écran, à partir de trames de mise à jour transmises par un serveur dans un flux de mise à jour,
**caractérisé en ce qu'**il comprend les étapes suivantes, dans ledit terminal :
- réception d'une trame de mise à jour, émise sans requête préalable dudit terminal, chaque trame comprenant une série d'au moins une commande de mise à jour suivie chacune d'un indicateur pouvant prendre deux valeurs, une première valeur indiquant la présence d'une commande à suivre dans ladite trame, et une seconde valeur indiquant que la commande considérée est la dernière commande de ladite trame ;
- décodage de chaque trame comprenant :
■ lecture et exécution de la première commande de ladite trame ;
■ lecture de l'indicateur suivant ladite première commande et, si ledit indicateur indique la présence d'une nouvelle commande, au moins une itération des étapes suivantes :
• lecture et exécution de ladite commande suivante ;
• lecture de l'indicateur suivant ladite commande, et interruption des itérations si ledit indicateur indique que la commande considérée est la dernière de ladite trame,
de façon que chaque commande soit exécutée dès sa réception par ledit terminal, sans requête dudit terminal.

11. Serveur d'au moins une scène graphique destinée à être présentée sur un écran d'au moins un terminal, par transmission dudit serveur vers le ou lesdits terminaux de trames de mise à jour dans un flux de mise à jour,
**caractérisé en ce qu'**il comprend :
- des moyens de construction de trames de mise à jour de ladite scène, chaque trame comprenant une série d'au moins une commande de mise à jour suivie chacune d'un indicateur pouvant prendre deux valeurs, une première valeur indiquant la présence d'une commande à suivre dans ladite trame, et une seconde valeur indiquant que la commande considérée est la dernière commande de ladite trame ;
- des moyens de transmission de chacune desdites trames de mise à jour vers au moins un desdits terminaux, sans attendre une requête d'un utilisateur.

12. Dispositif de restitution (16) d'une scène graphique destinée à être présentée sur un écran, à partir de trames de mise à jour transmises par un serveur dans un flux de mise à jour,
**caractérisé en ce qu'**il comprend :
- des moyens de réception d'une trame de mise à jour, émise sans requête préalable dudit terminal, chaque trame comprenant une série d'au moins une commande de mise à jour suivie chacune d'un indicateur pouvant prendre deux valeurs, une première valeur indiquant la présence d'une commande à suivre dans ladite trame, et une seconde valeur indiquant que la commande considérée est la dernière commande de ladite trame ;
- des moyens de décodage de chaque trame comprenant des moyens de lecture et d'exécution d'une desdites commandes et des moyens de lecture d'un desdits indicateurs, mettant en oeuvre les étapes de :
■ lecture et exécution de la première commande de ladite trame ;
■ lecture de l'indicateur suivant ladite première commande et, si ledit indicateur indique la présence d'une nouvelle commande, au moins une itération des étapes suivantes :
• lecture et exécution de ladite commande suivante ;
• lecture de l'indicateur suivant ladite commande, et interruption des itérations si ledit indicateur indique que la commande considérée est la dernière de ladite trame,
de façon que chaque commande soit exécutée dès sa réception par ledit terminal, sans requête dudit terminal.
